Europäisches Patentamt

European Patent Office

Office européen des brevets

(19)

(11) Publication number: **0 206 706**
A2

# EUROPEAN PATENT APPLICATION

(12)

(21) Application number: **86304596.9**

(51) Int. Cl.⁴: **G 01 V 3/24**

(22) Date of filing: **16.06.86**

(30) Priority: **24.06.85 US 747630**

(71) Applicant: **HALLIBURTON COMPANY, P.O. Drawer 1431, Duncan Oklahoma 73536 (US)**

(43) Date of publication of application: **30.12.86 Bulletin 86/52**

(72) Inventor: **Moore, Robert Anthony, 2150 Bentworth No. 354, Houston Texas 77077 (US)**

(74) Representative: **Waln, Christopher Paul et al, A.A. THORNTON & CO. Northumberland House 303-306 High Holborn, London WC1V 7LE (GB)**

(84) Designated Contracting States: **AT DE FR GB IT NL SE**

(54) **Measurement of electrical resistivity in borehole.**

(57) Apparatus and method for investigating the electrical resistivity of an earth formation in the vicinity of a borehole employ an array of electrodes including a central current electrode ($A_0$) and focussing current electrodes ($A_3$, $A_4$, $A_3'$, $A_4'$) above and below the central current electrode. A focussed resistivity measurement current is caused to flow from the current electrodes through the earth formation, the amplitude of the current flowing through upper and lower current electrodes being independently controlled by voltages measured by electrodes ($M_1$, $M_2$, $M_3$, $M_1'$, $M_2'$, $M_3'$) above and below the central electrode, respectively. Voltage and current measurement are provided for determining the resistivity of the earth formation.

- 1 -

## MEASUREMENT OF ELECTRICAL RESISTIVITY IN BOREHOLE

This invention relates to measuring the electrical resistivity of materials in the vicinity of an apparatus located in a borehole, and more particularly to measuring electrical resistivity of earth formations at diffferent lateral distances from the borehole.

It is known that measuring formation resistivity at several lateral distances from a well bore facilitates determination of characteristics of the formation relating to oil and gas production. A deep measurement will give the apparent formation resistivity $R_D$, a shallow measurement will give the invaded zone resistivity $R_S$, while a very shallow measurement of the formation immediately adjacent the borehole will give flushed zone resistivity $R_{xo}$.

The resistivity values may be used to determine when invasion has taken place, thereby detecting zones that have some permeability. Among other information, these logs are useful in detecting movable hydrocarbons present in the formation intersected by the borehole.

A number of resistivity measuring tools employing various electrode arrays are disclosed in the prior art. Such arrays may comprise multiple pairs of electrodes, spaced on either side of a central electrode conventionally designated as $A_o$. For example, in Figure 6 of U.S. patent No. 2,712,627 to Doll, an electrode array is shown having eight measurement and current electrodes located above and below a central, principal current emitting electrode $A_o$. Similarly, U.S. Patent No. 3,772,589 to Scholberg discloses an electrode array having ten measurement and current electrodes located above and below a central electrode $A_o$. The electrodes are symmetrically positioned about the $A_o$ electrode and shorted together in pairs to provide an electrode array which is electrically symmetrical about electrode $A_o$. Different ones of the electrode pairs are driven to induce current in the formation at different frequencies, and voltages are measured by the measurement electrode pairs to provide an indication of formation resistivity at different lateral depths of investigation.

Similar systems having focussing and measurement electrodes centered about one or more central current emitting electrodes are disclosed in U.S. Patent No. 3,882,376 to Schuster; U.S. patent No. 3,462,679 to Attali; U.S. Patent No. 3,365;658 to Birdwell; and U.S. Patent No. 4,319,192 to Chemali et al.

Prior art focussed-current resistivity measurement systems have one disadvantage in that they do not provide an adequate or consistent focussing in non-homogeneous earth formations. For example, when an electrode array is intersected by an earth formation boundary, inconsistent radial depth of the survey current and uncontrollable geometrical bias of the survey current can result. Furthermore, depth resolution of the formation resistivity measurements in the prior art is sometimes not adequate to locate the exact depth of producable zones in the earth formation. The portion of the formation which is useful for producing oil and gas is often only a few feet deep, thus it is vitally important that a resistivity measuring device has adequate depth resolution.

We have now devised a well logging method and apparatus which is capable of simultaneously measuring resistivity of an earth formation at a plurality of lateral distances from a borehole and which provides improved depth resolution for such measurements.

According to the present invention, a resistivity measurement apparatus includes an array of electrodes having a central survey current electrode and at least one pair of focussing current electrodes including an upper current electrode spaced above the central current electrode, and an independent lower current electrode spaced below the central current electrode. Voltage measurement electrodes are provided above and/or below the central current electrode. A current driving circuit produces a survey current flow and focussing current flows in the formation being logged. At least one control loop is provided responsive to the voltage measurement electrodes to control the amount of current driven through the upper and/or lower current electrodes. Such an arrangement may be employed to compensate for differences in resistivity of the

tool environment above and below the central current electrode. respectively. Additional electrodes and independent control loops can be provided to permit resistivity measurements at a plurality of lateral depths from the borehole. The resistivity of the formation can be calculated from measurements of the current flow through the central current electrode and of a voltage measured at at least one of the voltage measurement electrodes.

In a preferred embodiment, the apparatus of the present invention includes an array of electrodes having a central current electrode $A_o$, at least one pair of current electrodes including an upper and a lower current electrode spaced above and below the central current electrode $A_o$, respectively, and upper and lower voltage measurement electrodes located above and below the central current electrode $A_o$. Current driving circuitry drives a focussed survey current from the electrode array through the materials in the vicinity of the apparatus. The current driving circuit is responsive to the upper measurement electrodes to control the current driven through the upper current electrode. The current driven through the lower current electrode is controlled by the current driving circuitry independently of the upper current electrode in response to the lower measurement electrode. The resistivity of the materials in the vicinity of the apparatus is determined from measurements of the current flow through the central current electrode and of the voltage at at least one of the voltage measurement electrodes.

In a further preferred embodiment, the current electrodes include a first pair of current electrodes having an electrode $A_3$ spaced above the current electrode $A_o$ and an elec-

trode $A_3$, spaced below the central current electrode $A_o$. A second pair of current electrodes includes an electrode $A_4$ spaced above the electrode $A_3$ and an electrode $A_4'$ spaced below the electrode $A_3'$. The upper voltage measurement electrodes are located between electrode $A_o$ and electrode $A_4$, and the lower voltage measurement electrodes are located between electrode $A_o$ and electrode $A_4'$. In the shallow mode, the current driving circuitry drives electrodes $A_o$, $A_3$ and $A_3'$ synchronously at a frequency $F_S$ in order to generate current from electrodes $A_o$ and $A_3$ to electrode $A_4$ and from electrodes $A_o$ and $A_3'$ to electrode $A_4'$ in order to provide a shallow focus for the survey current. In the deep mode, the current driving circuitry drives electrodes $A_o$, $A_3$, $A_3'$, $A_4$ and $A_4'$ synchronously at a frequency $F_D$ in order to generate a deep focussed current between the electrode array and a remote electrode. Ideally, the frequency $F_S$ is harmonically related to and greater than the frequency $F_D$.

In order that the invention may be more fully understood, reference is made to the accompanying drawings, in which:

Fig. 1 is a schematic representation of one embodiment of focussed-current well logging instrument in an operative position;

Fig. 2 is a diagram showing the well logging down-hole electrode array and the focussed currents generated thereby, wherein the deep mode of operation is represented on the left-hand side of the diagram and the shallow mode of operation is illustrated on the right-hand side of the diagram;

Fig. 3 is a schematic diagram of the shallow mode survey current drive and measurement circuitry; and

Fig. 4 is a schematic diagram of the deep mode survey current drive and measurement circuitry.

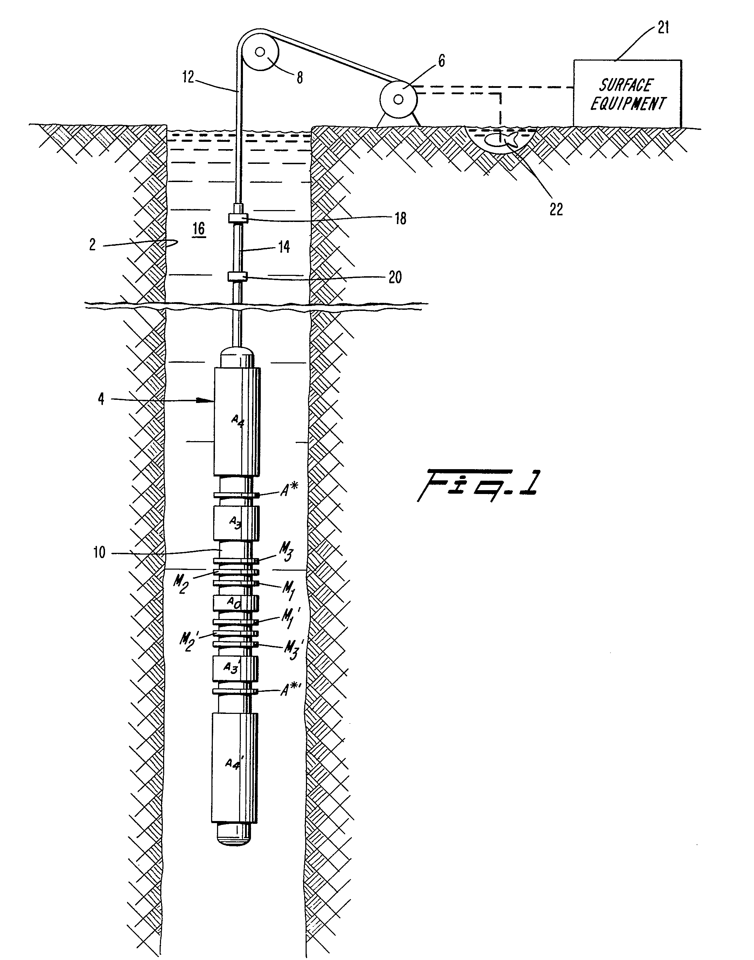

Referring to Fig. 1, a borehole 2 is drilled into the earth's surface and a focussed current well logging tool 4 is lowered into the bore hole 2 by a winch 6 and pulley 8. As shown, the logging tool 4 may include an insulating mandrel 10 including an array of electrodes arranged thereon and suspended in the borehole by a multiconductor cable 12. The lowermost portion of the multiconductor cable may be provided with an insulating cover 14 which electrically isolates the cable 12 from the conductive drilling mud 16 in the bore hole 2. A current return electrode 18 is mounted on the insulating cover 14 for use in measuring the deep formation resistivity, and a spontaneous potential electrode 20 may be employed to measure the spontaneous potential generated by electrochemical differences between the drilling mud 16 and the formation. The surface equipment 21 transfers electrical power to the logging tool 4 via the cable 12 and records measurement data transmitted by the logging tool 4. Typically, the surface equipment 21 will generate plots of measured resistivities at various formation depths as well as other related curves. A "fish" electrode 22 is deployed from the surface equipment, typically into a pit of conductive drilling fluids, in order to provide a remote electrical potential reference for the logging tool 4.

The electrode array on the insulating mandrel 10 may comprise a central current electrode $A_o$ and a first electrode pair comprising opposed upper and lower current electrodes $A_3$, $A_3'$ and a second electrode pair comprising upper and lower current electrodes $A_4$, $A_4'$. The reference to the electrodes being "upper" or "lower" or being located "above" or "below" the central electrode is intended only to indicate the relative spatial positions of the electrodes when the tool is oriented vertically. A plurality of voltage measurement electrodes $M_1$, $M_2$ and $M_3$ may be mounted on the insulating mandrel 10 between central current electrode $A_o$ and upper current electrode $A_3$, and voltage measurement electrodes $M_1'$, $M_2'$ and $M_3'$ may be mounted on the lower part of the electrode array between central current electrode $A_o$ and lower current electrode $A_3'$. Auxiliary measurement electrodes $A^*$ is mounted between current electrodes $A_3$ and $A_4$, and auxiliary measurement electrode $A^{*'}$ is mounted between current electrodes $A_3'$ and $A_4'$. It is not necessary that the central current electrode $A_o$ be located at the geometric midpoint of the electrode array, but merely that it be central in the sense that corresponding opposed electrodes are arranged on opposite sides of the central current electrode $A_o$.

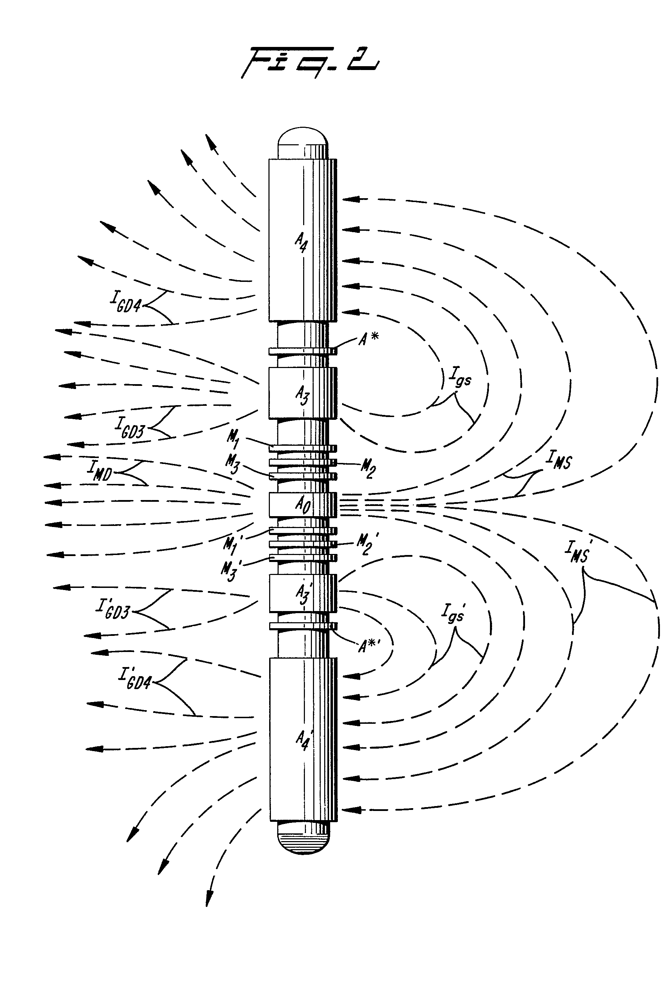

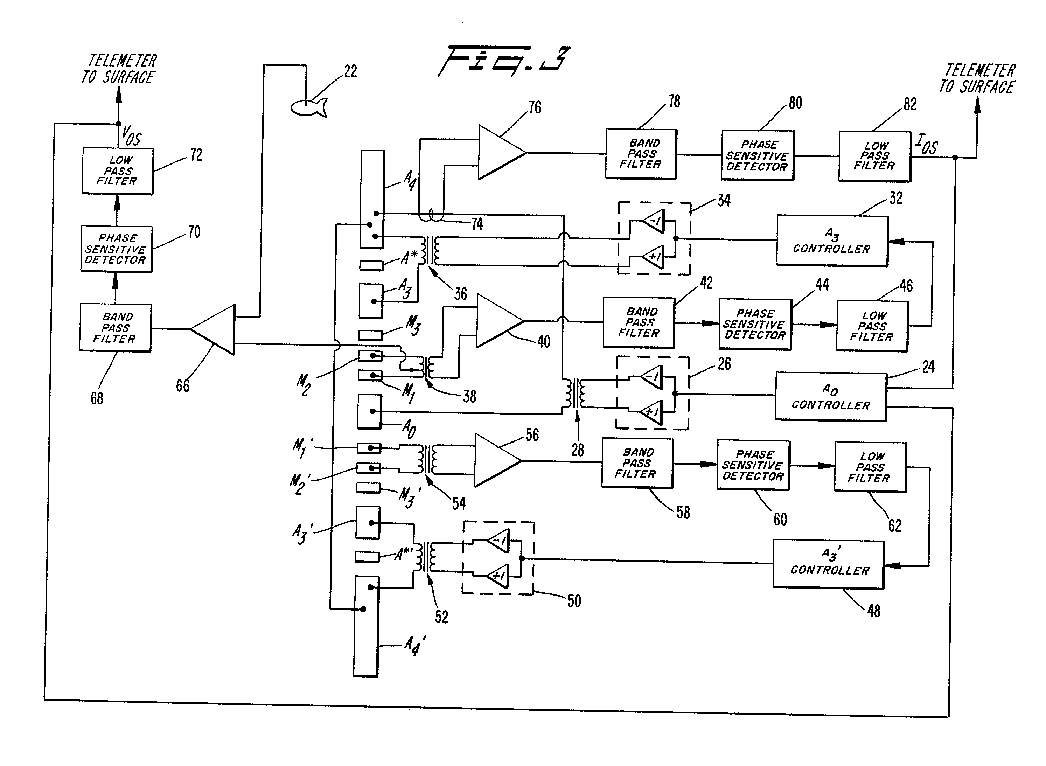

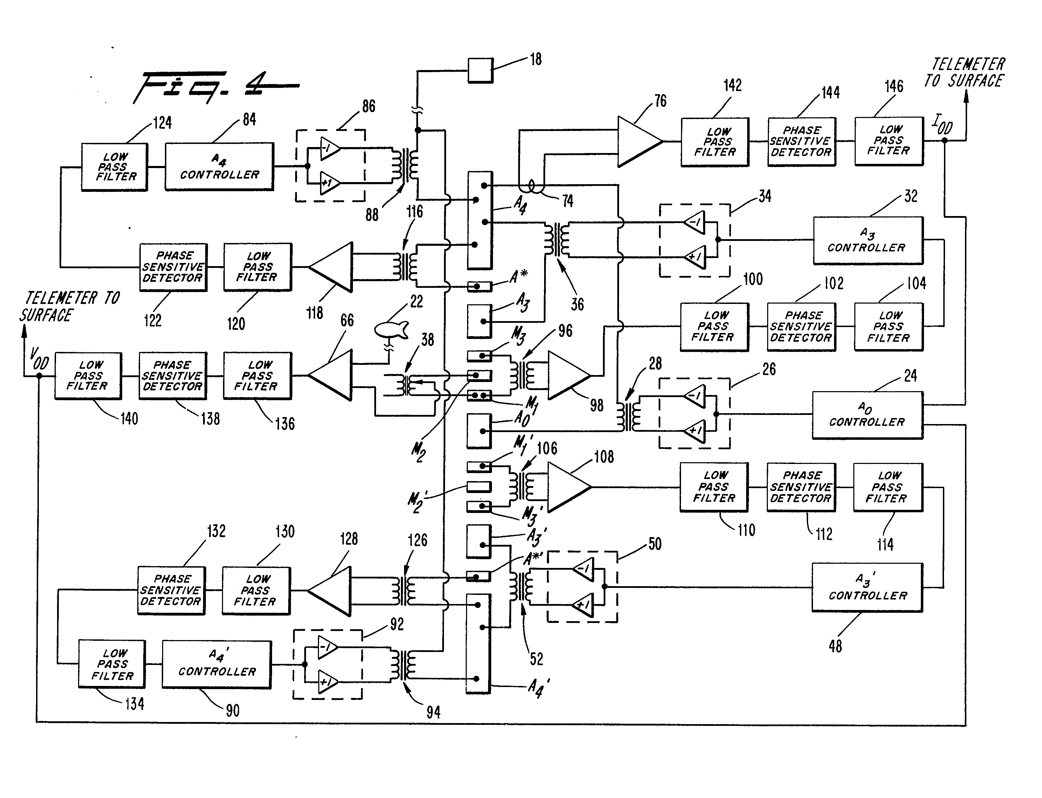

A general description of the operation of the deep and shallow modes of the focussed current resistivity measuring tool 4 will be given with reference to Fig. 2, which schematically depicts representative current flow paths in the shallow mode of operation (right hand side) and the deep mode of operation (left hand side). Though in actual operation the generated currents will be alternating currents wherein the current flow direction alternately reverses at the current drive frequency, for ease of description the currents will be described as flowing in a single direction only. A detailed description of the current drive circuitry for the shallow mode and deep mode will be given below with reference to Figs. 3 and 4, respectively.

In the shallow mode of operation, the current electrodes $A_o$, $A_3$, and $A_3'$ are synchronously driven by a sinusoidal drive current having a frequency $F_S$; that is the drive currents supplied to each of the current electrodes $A_o$, $A_3$ and $A_3'$, are of the same frequency and are in-phase with one another. The shallow mode drive current creates a potential difference between the drive electrodes $A_o$, $A_3$ and $A_3'$ and the shallow mode current return electrodes $A_4$ and $A_4'$. Thus, a guard current $I_{gs}$ flows between the current electrode $A_3$ and the electrode $A_4$, and a guard current $I_{gs}'$ flows between the current electrode $A_3'$ and the electrode $A_4'$. The guard currents $I_{gs}$ and $I_{gs}'$ force the shallow resistivity measuring currents $I_{os}$ and $I_{os}'$ to flow outwardly for a relatively short lateral distance so that it passes through the shallow portion of the formation rather than through the conductive drilling mud to the electrodes $A_4$ and $A_4'$, respectively.

In the deep mode of operation, all of the current electrodes $A_o$, $A_3$, $A_3'$, $A_4$ and $A_4'$ are synchronously driven by a deep mode sinusoidal drive current having a frequency $F_D$. Preferably, the deep mode drive current is harmonically related to the shallow mode drive current and has a lower frequency than the shallow mode drive current. For example, the shallow mode drive current might be the eighth harmonic of the deep mode drive current and therefore have a frequency $F_S$ which is eight times the frequency $F_D$ of the deep mode drive current. As is well-known in the art, various operating parameters would affect the actual values selected for the drive currents. Preferably, the deep mode survey current has a frequency on the order of 50 Hz. Deep resistivity survey currents $I_{OD}$ flow between the central current electrode $A_o$ and the remote current return electrode 18 mounted on the insulating cover 14 of the multiconductor cable 12 (Fig. 1). Alternatively, an exposed portion of the cable 12 could act as the current return electrode. The deep mode guard currents $I_{gd}$ produced by the current electrodes $A_3$ and $A_4$, and the guard currents $I_{gd}$ produced by the current electrodes $A_3$ and $A_4$ inject the survey currents $I_{od}$ to a deep portion of the formation in order to obtain a deep resistivity measurement. Thus, the deep survey currents $I_{od}$ penetrate into the formation in a direction substantially perpendicular to the vertical axis of the borehole 2 for a relatively deep lateral distance.

Turning now to Fig. 3, the shallow mode current drive circuitry includes an $A_o$ controller having an oscillator which supplies a power amplifier 26 with a shallow sinusoidal drive signal at a frequency of $F_S$. The power amplifier 26 establishes a potential difference across the primary winding of a transformer 28. The secondary winding of the transformer 28 is connected at one terminal with the current electrode $A_4$ and at the other terminal with the central current electrode $A_o$. Current electrodes $A_4$ and $A_4'$ are short-circuited by a conductor 30. The potential difference established between the central current electrode $A_o$ and the current electrodes $A_4$ and $A_4'$ causes survey currents $I_{os}$ (Fig. 2) to flow between the electrodes. The level of the drive signal supplied to the power amplifier 26 is adjusted by the $A_o$ controller to provide a desired voltage amplitude on the current electrodes. Several different types of controllers are known in the art and include controllers which provide a constant current output, controllers which provide a fixed voltage between electrodes, and constant power output controllers.

The $A_3$ and $A_3'$ current electrodes are independent of one another. They may be controlled by separate but identical controllers. As shown in Figure 3, the $A_3$ electrode is connected to one terminal of the secondary winding of a transformer 36, the other secondary winding terminal being connected to the current electrode $A_4$. A power amplifier 34 establishes a potential difference across the primary winding of the transformer 36 in response to a drive signal from the $A_3$ controller 32. The drive signal from the $A_3$ controller has the same frequency $F_S$ as the drive signal from the $A_o$ controller, and is in-phase with the $A_o$ drive signal. Thus the guard current $I_{gs}$ flowing between the electrodes $A_3$ and $A_4$ is of the same frequency $F_S$ and is in-phase with the shallow survey current $I_{os}$. This result can be obtained by having the $A_0$ and $A_3$ controllers share a common oscillator, in which case the individual controllers control the amplitude of the drive signal. Alternatively, each controller could have its own oscillator and electronic controls could be provided to synchronize the separate oscillators. As mentioned earlier, the guard current $I_{gs}$ forces the shallow survey current $I_{os}$ to travel laterally into the formation for a given distance.

By adjusting the amplitude of the $A_3$ drive signal, the guard current level between the current electrodes $A_3$ and $A_4$ can be varied, thereby adjusting the lateral focussing of the shallow survey current $I_{os}$. The amplitude level of the $A_3$ drive signal

- 11 -

is set by the $A_3$ controller 32 in accordance with a feedback signal from the voltage measurement electrodes $M_1$ and $M_2$. Ideally, there will be no potential difference between the voltage electrodes. A difference in potential gives an indication that a portion of the shallow survey current $I_{os}$ is passing through the conductive drilling mud 16, thus the resistivity measurement would not be solely a measurement of the shallow formation resistivity, but rather would be weighted by the resistivity of the conductive drilling mud 16.

The primary winding of a transformer 38 is connected across the voltage electrodes $M_1$ and $M_2$ to provide an indication of the potential difference between the electrodes to the voltage amplifier 40, which generates an error voltage signal. The error voltage output signal will be a periodic signal due to the alternating polarities of the measurement electrodes caused by the AC survey current $I_{os}$. A band pass filter 42 has a pass band centered at the shallow survey current frequency $F_S$ in order to filter out any deep mode frequency component of the signal from the amplifier 40. A phase-sensitive detector 44 converts the sinusoidal shallow error signal from the band pass filter 42 to a rectified sine wave, which is then filtered by a low pass filter 46. The DC error signal from the low pass filter 46 is fed to the $A_3$ controller 32, and is integrated to establish the operating level of the power amplifier 34. If undesired survey current is passing through the drilling mud 16 of the borehole 2, the feedback signal from the measurement electrodes $M_1$ and $M_2$ causes the $A_3$ controller 32 to increase the amplitude of the drive signal and, thus, the operating level of the power amplifier 34 in order to increase the level of the guard current $I_{gs}$ and force

the survey current $I_{os}$ deeper into the formation. If there is no difference in potential between the electrodes $M_1$ and $M_2$ then the operating level of the power amplifier 34 is allowed to remain at its present level.

A second feedback loop is used in the bottom portion of the electrode array in order to adjust the output signal from the $A_3'$ controller 48 to establish the proper operating level of the power amplifier 50 which establishes a potential difference across the primary winding of the transformer 52 to drive the lower shallow guard current $I_{gs}'$. The measurement electrodes $M_1'$ and $M_2'$, transformer 54, voltage amplifier 56, band pass filter 58, phase-sensitive detector 60, and low pass filter 62 provide a DC error signal to the $A_3'$ controller 48. Since the operation of the lower feedback loop is identical to that of the upper feedback loop, a detailed description of the operation is not necessary.

Stabilization in the control loops is improved by using a downhole phase-sensitive detector in the feedback loop from the M electrodes to the power amplifiers. The phase-sensitive detectors provide measurements of the resistive portion of the formation while rejecting induced voltage in the bridle or tool wiring.

Due to the separate feedback loops, the $A_3$ controller 32 and the $A_3'$ controller 48 act independently of each other. Thus, the guard currents $I_{gs}$ and $I_{gs}'$ can be separately controlled to permit greater flexibility in focussing the survey current $I_{os}$. This is particularly important, for example, when the resistivity of the formation substrate adjacent one portion of the logging tool has a resistivity significantly different than the resistivity of the substrate adjacent another portion of the logging tool. By providing the upper and lower portions of the electrode array with independently operated controllers, the well logging tool of the present invention has improved depth resolution of resistivity measurements in the earth.

The measurement electrodes $M_1$ and $M_2$ also provide an indication of the potential induced in the formation by the survey current for use in measuring the resistivity of the formation. The potential at the center tap of the primary winding of transformer 38 is supplied to the differential amplifier 66. Due to the use of the center tap voltage, the signal to the differential amplifier 66 will be the average voltage level of the electrodes $M_1$ and $M_2$ when the electrodes are not at equal potential. Of course, if the potential level is the same at each of the electrodes $M_1$ and $M_2$, the voltage at the center tap will be at that level.

The differential amplifier 66 measures the center tap voltage with respect to the remote potential reference level from the fish electrode 22. The output of the differential amplifier 66 is passed through a band pass filter 68 to filter out the signal components not related to the shallow survey current. A phase-sensitive detector 70 and low pass filter 72 convert the shallow frequency voltage signal from the band pass filter 68 into a filtered DC value $V_{os}$ for transmission to the surface equipment 21 (Fig. 1) by telemetry circuits. The $V_{os}$ signal is also used by the $A_o$ controller as one variable used in setting the operating level of the power amplifier 26 and, thereby, the amplitude of the shallow survey current $I_{os}$.

The current emitted from the $A_o$ electrode through the borehole and earth formation to the respective current returns is a composite current containing both the deep and shallow frequency components. This composite current is measured by a current transformer 74 and amplified by an amplifier 76. A band pass filter 78 separates the shallow frequency current signal from the composite frequency signal. A phase-sensitive detector 80 converts the shallow frequency current to a rectified sine wave, which is filtered by a low pass filter 82. This filtered signal $I_{OS}$ is sent to telemetry circuits for transmission to the surface equipment 21 and to the $A_o$ controller as an input used in setting the output level of the power amplifier 26 at the shallow mode survey current frequency $F_S$.

The surface equipment 21 uses the ratio of the $V_{OS}$ voltage signal from the measurement electrodes relative to the $I_{OS}$ current signal to give an indication of the resistivity of the shallow portion of the formation.

Figure 4 schematically illustrates the deep mode survey current drive circuitry. As shown, the outputs from the $A_o$ controller 24, $A_3$ controller 32, and $A_3'$ controller 48 are connected to the electrode array in the same manner as in the shallow mode. Thus, the same current driving equipment can be used for both modes. However, the feedback loops used in the deep mode for controlling the deep mode frequency output of the controllers 24, 32 and 48 are slightly different than the shallow mode feedback loops, but operate on the same general principle.

As well as outputting a drive signal at the frequency $F_S$ for use in the shallow mode, the $A_o$ controller 24, $A_3$ controller 32 and $A_3'$ controller 48 output a second drive signal at a frequency $F_D$ to synchronously drive the current electrodes $A_o$, $A_3$ and $A_3'$, respectively. As discussed with reference to operation in the shallow mode, synchronization between the drive currents can be obtained by using a common oscillator for all of the controllers or by electronically controlling the operation of separate oscillators. An $A_4$ controller 84 operates through the power amplifier 86 and transformer 88 to drive the electrode $A_4$ with respect to the remote current return electrode 18. An $A_4'$ controller 90 operates through a power amplifier 92 and transformer 94 to drive the current electrode $A_4'$ with respect to the remote current return electrode 18. The $A_4$ controller 84 and $A_4'$ controller 90 force the current electrodes $A_4$ and $A_4'$, respectively, to emit guard currents $I_{gd4}$ and $I_{gd4}'$ which are synchronous with the guard currents from the $A_3$ and $A_3'$ electrodes and the survey current from the $A_o$ electrode.

The feedback loop for controlling the $A_3$ controller 32 deep mode drive signal output includes a transformer 96 having its primary winding connected across upper measurement electrodes $M_1$ and $M_3$. Any difference in potential between the measurement electrodes $M_1$ and $M_3$ is amplified by the amplifier 98. The low pass filter 100 passes only the signals at the deep mode survey current frequency $F_D$, and the deep mode error signal output of the low pass filter 100 is converted to a rectified sine wave by the phase-sensitive detector 102 and filtered by low pass filter 104. The filtered output from the low pass filter 104 is input to the $A_3$ controller 32 to adjust the amplitude of the deep mode drive signal.

The deep mode feedback loop for controlling the $A_3'$ controller 48 operates on the identical principles as the $A_3$

controller feedback loop. Transformer 106 measures the potential difference between the lower measurement electrodes $M_1'$ and $M_3'$. Amplifier 108, low pass filter 110, phase-sensitive detector 112 and low pass filter 114 then provide an input to the $A_3'$ controller 48 to control the deep mode operating level of the power amplifier 50.

The $A_4$ controller 84 is also provided with a feedback loop comprising transformer 116, low pass filter 120, phase-sensitive detector 122 and low pass filter 124. The primary winding of the transformer 116 is connected between the $A_4$ current electrode and the A* measurement electrode to measure any potential differences between the electrodes. If the A* electrode is at a higher potential than the $A_4$ electrode, then current is passing up the borehole from the $A_3$ electrode to the $A_4$ electrode. Conversely, if the potential of the $A_4$ electrode is higher than that of the A* electrode, current is passing down the borehole from the current electrode $A_4$ to the current electrode $A_3$. These borehole currents have an adverse effect on the focussing of the deep mode survey current.

The low pass filter 120 filters out any signals at the shallow mode frequency and passes only those signals measured by the transformer 116 at the deep mode frequency $F_D$. In an alternative embodiment, the low pass filter 120 could be replaced with a band pass filter designed to have a pass band centered at the appropriate low frequency corresponding to $F_D$. The deep mode error signal from the low pass filter 120 then passes through the phase-sensitive detector 122 and low pass filter 124 to provide the $A_4$ controller 84 with an input used in controlling the operating level of the power amplifier 86. If, during the positive polarity portion of the drive signal, the potential at the $A_4$ electrode is higher than the potential at the A* electrode, then the operating level of the $A_4$ controller 84 is lowered to reduce the current output from the $A_4$ electrode. If the current emitted by the $A_4$ electrode is too low, that is if the potential at the $A_4$ electrode is lower than that of the A* electrode, the amplitude of the current drive signal from the $A_4$ controller 84 is increased to raise the deep mode frequency current output from the $A_4$ electrode.

An identical feedback loop comprising a transformer 126, amplifier 128, low pass filter 130, phase-sensitive detector 132, and low pass filter 134 is used to control the amplitude of the deep mode current drive signal supplied by the $A_4'$ controller 90 to the power amplifier 92. The primary winding of the transformer 126 is connected across the A*' and $A_4'$ electrodes, which directly correspond to the A* and $A_4$ electrodes in the upper portion of the electrode array, to detect any borehole currents at the deep mode frequency passing between the $A_3'$ and $A_4'$ electrodes. The feedback loop operates in the same manner as the $A_4$ feedback loop to adjust the current output of the $A_4'$ electrode in order to eliminate the borehole currents.

The surface equipment 21 evaluates the signals $V_{OD}$ and $I_{OD}$ to produce a log corresponding to the deep resistivity measurements. The $V_{OD}$ signal is obtained in the same manner as the $V_{OS}$ signal in the shallow mode. As in the shallow mode, the differential amplifier 66 measures the center tap voltage from the primary winding of the transformer 38 with respect to the remote potential reference level from the fish electrode 22. Low pass filter 136 filters out the signals which have a higher frequency than the deep mode survey current $F_D$. The deep mode frequency voltage signal is then converted into a filtered DC value $V_{OD}$ by the phase-sensitive detector 138 and low pass filter 140.

The composite current measured by the current transformer 74 and amplified by the amplifier 76 is input into the low pass filter 142, which filters out those portions of the signal that do not relate to the deep mode drive current. A phase-sensitive detector 144 converts the deep frequency current to a rectified sine wave, which is filtered by a low pass filter 82 to produce the deep mode drive current signal $I_{OD}$.

Due to the provision of four separate feedback loops for individually controlling the deep mode current outputs of the different current electrodes, proper focussing of the survey currents is maintained even when the logging tool is located near a boundary between different earth formations. That is, even when the electrode array is intersected by a boundary layer, the upper and lower current electrodes are controlled independently in order to provide focussing adapted to the local formation properties.

Another advantage of the improved focussing is that additional downhole tools or equipment can be mounted above the resistivity measuring device. Although these additional tools may be conductive, little effect is seen on resistivity measurements due to the maintenance of focussing and remoteness achieved by the present invention.

Various modifications to the preferred embodiment could be made by one of ordinary skill in the art without departing from the inventive concepts contained in the present invention. For example, the $M_1$-$M_2$ measurement electrode pair could be used in the feedback control loops for the deep mode as well as the shallow mode. Alternatively, the $M_1-M_3$ measurement pair utilized in the deep mode could also be used in the shallow mode feedback loops. Also, the measurement of $V_{os}$ and/or $V_{od}$ could be made by averaging voltage measurements on both the upper and lower measurement electrodes.

The principles, preferred embodiments and modes of operation of the present invention have been described in the foregoing specification. The invention which is intended to be protected herein, however, is not to be construed as being limited to the particular forms disclosed, since these are to be regarded as illustrative rather than restrictive. Variations and changes may be made by those skilled in the art without departing from the spirit of the invention.

CLAIMS:

1.      Apparatus for investigating the electrical resistivity of materials in the vicinity of the apparatus in a borehole, comprising:

(i)     an array of electrodes including:  a central current electrode $A_o$;  at least one pair of current electrodes including an upper current electrode $(A_3, A_4)$ spaced above said central current electrode $A_o$ and a lower current electrode $(A_3', A_4')$ spaced below said central current electrode $A_o$;  upper voltage measurement electrodes $(M_1, M_2, M_3)$ located above said central current electrode $A_o$;  and  lower voltage measurement electrodes $(M_1', M_2', M_3')$ located below said central current electrode $A_o$;

(ii)    current driving means for producing current flow in said materials in the vicinity of the apparatus and for focusing said current flow including:  means (32; 84) responsive to said upper measurement electrodes for driving said upper current electrode;  and  means (48; 90) responsive to said lower measurement electrodes for driving said lower current electrode independently of said upper electrode;  and

(iii)   means for determining resistivity of said materials from measured current flow through the central current electrode and from a voltage measured at at least one of said voltage measurement electrodes.

2.      Apparatus according to claim 1, wherein said current electrodes include:  a first pair of current electrodes comprising an electrode $A_3$ spaced above said central current electrode $A_o$, and an electrode $A_3'$ spaced below said central current electrode $A_o$;  a second pair of current electrodes comprising an electrode $A_4$ spaced above said electrode $A_3$, and an electrode $A_4'$ spaced below said electrode $A_3'$;  and wherein said upper voltage measurement electrodes are located between said electrode

$A_o$ and electrode $A_4$; and said lower voltage measurement electrodes are located between said electrode $A_o$ and electrode $A_4'$.

3. Apparatus according to claim 2, wherein said current driving means drives electrodes $A_o$, $A_3$ and $A_3'$ synchronously at a frequency $F_S$ whereby current flow is produced from electrodes $A_o$ and $A_3$ to electrode $A_4$ and from electrodes $A_o$ and $A_3'$ to electrode $A_4'$, thereby to provide a shallow focus for measurement current produced in the materials in the vicinity of the apparatus.

4. Apparatus according to claim 2 or 3, further comprising a remote electrode (22) located remote from said electrode array, and wherein said current driving means drives electrodes $A_o$, $A_3$, $A_3'$, $A_4$ and $A_4'$ synchronously at a frequency $F_D$ to provide a deep focus for measurement current produced in the materials in the vicinity of the apparatus.

5. Apparatus according to claim 4, wherein the current drive means are so arranged that the frequency $F_S$ is harmonically related to and greater than the frequency $F_D$.

6. Apparatus according to claim 2,3,4 or 5, wherein said current driving means includes an $A_o$ current supply coupled to a first transformer, said first transformer having a winding connected between the electrode $A_o$ and the electrode $A_4$.

7. A method for investigating the electrical resistivity of materials in the vicinity of a borehole with a well logging tool including an electrode array having a central current electrode $A_o$, at least one pair of current electrodes including an upper current electrode ($A_3$, $A_4$) spaced above said central current electrode $A_o$ and a lower current electrode ($A_3'$, $A_4'$) spaced below said central current electrode $A_o$, upper voltage measurement electrodes ($M_1$, $M_2$, $M_3$) located above said central current electrode $A_o$, and lower voltage measurement electrodes ($M_1'$, $M_2'$, $M_3'$) located below said central current electrode $A_o$, comprising the steps of:

(i)  driving said $A_o$ electrode to produce a survey current flow in said materials in the vicinity of the borehole;

(ii)  driving said upper current electrode and said lower current electrode synchronously with said $A_o$ electrode to produce upper and lower focussing currents, respectively, for focussing said survey current;

(iii)  controlling the amplitude of said upper focussing current in response to the voltage measurement from said upper voltage measurement electrodes;

(iv)  controlling the amplitude of said lower focussing current in response to the voltage measurement from said lower voltage measurement electrodes, said lower focussing current being controlled independently of said upper focussing current;  and

(v)  determining the resistivity of said materials from measured current flow from the central current electrode $A_o$ and from a voltage measured at at least one of said voltage measurement electrodes.

8.    A method of claim 7, wherein said at least one pair of current electrodes includes a first pair of current electrodes comprising an electrode $A_3$ spaced above said central current electrode $A_o$ and an electrode

$A_3'$ spaced below said central current electrode $A_o$, and a second pair of current electrodes comprising an electrode $A_4$ spaced above said electrode $A_3$ and an electrode $A_4'$ spaced below said electrode $A_3'$, and said upper voltage measurement electrodes are located between said electrode $A_o$ and said electrode $A_4$ and said lower voltage measurement electrodes are located between said electrode $A_o$ and said electrode $A_4'$; and wherein said electrodes $A_o$, $A_3$ and $A_3'$ are driven synchronously at a frequency $F_S$ whereby current flow is produced from electrodes $A_o$ and $A_3$ to electrode $A_4$ and from electrodes $A_o$ and $A_3'$ to electrode $A_4'$, thereby to provide a shallow focus for survey current produced in said materials.

9. A method according to claim 8, wherein a remote electrode (22) is located remote from said electrode array, and wherein said electrodes $A_o$, $A_3$, $A_3'$, $A_4$ and $A_4'$ are driven synchronously at a frequency $F_D$ to provide a deep focus for said survey current.

10. A method according to claim 8 or 9, wherein the frequency $F_S$ is harmonically related to and greater than frequency $F_D$.

0206706

Fig.1

FIG. 2

0206706

Fig.3

TELEMETER TO SURFACE

TELEMETER TO SURFACE

Low Pass Filter (82) — $I_{OS}$

Phase Sensitive Detector (80)

Band Pass Filter (78)

$A_3$ Controller (32)

$A_4$ (76)

Low Pass Filter (46)

Phase Sensitive Detector (44)

Band Pass Filter (42)

$A_3$ Controller — (34) −1 / +1

$A_0$ Controller (24)

Low Pass Filter

Phase Sensitive Detector (26) −1 / +1

Band Pass Filter (58)

$A_3'$ Controller (48)

Low Pass Filter (62)

Phase Sensitive Detector (60)

(50) −1 / +1

$A_4$

$A^*$ (36) $A_3$ $M_3$ (38) $M_1$ $A_0$

(40)

$M_2$

$M_1'$ $M_2'$ (54) $M_3'$ $A^{*'}$ (52) $A_3'$ $A_4'$

(56)

(74)

(66)

(22)

Band Pass Filter (68)

Phase Sensitive Detector (70)

Low Pass Filter (72) — $V_{OS}$

(28)

Fig. 4

TELEMETER TO SURFACE

$I_{00}$

146 LOW PASS FILTER
144 PHASE SENSITIVE DETECTOR
142 LOW PASS FILTER
76
74
$A_4$
18
32 $A_3$ CONTROLLER
34
100
104 LOW PASS FILTER
102 PHASE SENSITIVE DETECTOR
36
$A^*$ $A_3$
$M_3$
96
98
24 $A_0$ CONTROLLER
26
28
$M_1$ $A_0$ $M_1'$ 106
108
$M_3'$ $A_3'$
114 LOW PASS FILTER
112 PHASE SENSITIVE DETECTOR
110 LOW PASS FILTER
48 $A_3'$ CONTROLLER
50
$A^{*'}$
52
$A_4'$
$M_2$
$M_2'$

86
88
116
22
38
66
118
120 LOW PASS FILTER
122 PHASE SENSITIVE DETECTOR
84 $A_4$ CONTROLLER
124 LOW PASS FILTER
136 LOW PASS FILTER
138 PHASE SENSITIVE DETECTOR
140 LOW PASS FILTER
126
128
130 LOW PASS FILTER
132 PHASE SENSITIVE DETECTOR
134 LOW PASS FILTER
90 $A_4'$ CONTROLLER
92
94

TELEMETER TO SURFACE

$V_{00}$